# EUROPEAN PATENT SPECIFICATION

(11) **EP 4 219 287 B1**
(45) Date of publication and mention of the grant of the patent: **27.11.2024**
(21) Application number: 22154578.3
(22) Date of filing: 01.02.2022
(51) Int. Cl.: B63H 9/061, B63H 9/06, B63H 9/10

(54) **WINGSAIL STRUCTURE FOR A WIND-ASSISTED PROPULSION ARRANGEMENT OF A MARINE VESSEL**
FLÜGELSEGELSTRUKTUR FÜR EINE WINDUNTERSTÜTZTE ANTRIEBSVORRICHTUNG EINES SCHIFFES
STRUCTURE DE VOILE POUR UN AGENCEMENT DE PROPULSION D'UN NAVIRE ASSISTÉ PAR LE VENT

(43) Date of publication of application: 02.08.2023
(73) Proprietor: AlfaWall Oceanbird AB, 147 80 Tumba (SE)
(72) Inventor: RAZOLA, Mikael, SE-132 37 SALTSJÖ-BOO (SE); KOTZ, Emil, SE-117 39 STOCKHOLM (SE); ALVÀN, Jonas, SE-167 64 BROMMA (SE)
(74) Representative: Alfa Laval Attorneys

(56) References cited:
- GB-A- 1 410 175
- JP-A- 2019 108 046
- US-A- 4 402 277
- US-A1- 2019 233 056

## Description

### TECHNICAL FIELD

The present disclosure relates to a wingsail structure for a wind-assisted propulsion arrangement of a marine vessel and to a method of operating a wind-assisted propulsion arrangement as defined in the appended claims.

### BACKGROUND

Sails have been known for a long time as means of propulsion of ships. Traditionally, flexible sails have been mounted on masts to harness the power of wind and propel the ship. The modern merchant vessels commonly use fossil fuels and combustion engines to propel the vessel. Use of wind propulsion has been suggested to reduce the overall consumption of fossil fuels. For this purpose, rigid sails can be used. The amount of power being generated is related to a large number of interlinked factors, but wing area and other geometric aerodynamic characteristics are primary performance indicators. A possible geometric setup can be achieved by combining a main wing with a flap that can generate a large propulsive force given the wing size, compared to a wing without a flap. High efficiency wingsail arrangement and structure that can generate a large amount of propulsive force given its absolute size can be obtained for example by adjusting a camber formed by the main wingsail and the flap. When aerodynamic propulsive force from the wingsails is not desired or the force should be limited, the vessel stability, vessel safety and operability should be taken into consideration. This adds complexity and challenges in using rigid wingsails as ship propulsors. In addition to this, the vessel performance is related to the prevailing wind strengths and directions. Due to the statistical distribution of for example wind strength, it is clear that during the majority of time the wind speed is fairly moderate. Therefore, the wing characteristics should be configured so that the wingsail can utilize low wind speeds and at the same time be able to cope with more rarely occurring high wind speeds in a safe manner.

The use of rigid sails has been discussed in the prior art. For example, US10906620B2 discloses a reefable double airfoil, having shape members for the respective fore and aft flap, which are traversed by a fore mast while being able to turn around an axis defined thereby. In a variant, the flaps are constructed as rigid boxes, which can be telescopically nested in series. US10906620 also discloses in a variant a double flap sail construction in which each flap can be made by telescopically nesting a series of generally rigid box type shape members. However, the telescopic nesting may lead to wear of the boxes and this in turn may lead to problems with fit of the boxes when nesting the boxes. In case of damage to the boxes, it may be difficult to retract the sail whereby the construction may be subject to forces exerted by the wind when propulsion by the wingsail is not desired.

A rigid sail is known for example from a document US4561374A, which discloses a construction for a rigid sail assembly which includes a rigid mainsail section and a rigid jibsail section, both of complemental airfoil cross-sectional configuration and rotatably displaceable, as a unit, through 360 relative to the ship centerline, and with the jibsail section being further independently arcuately displaceable within a sector of predetermined angular extent relative to said mainsail section. However, this construction may be subject to forces exerted by the wind when the vessel is docked or when propulsion by the wingsail is not desired. Further rigid sails are shown by JP2019108046A and US4402277A.

Another example of a rigid sail is shown in a document WO2004024556 A1, which discloses an articulated rigid sail intended to ensure the propulsion by wind of an aquatic or land vehicle. The rigid sail comprises a mast on which a plurality of modules are mounted, spaced vertically apart, and to which a rigid shell forming a sail is fixed. Each module of two articulated sections makes it possible to curve the profile of the sail. However, this sail poses problems when the vessel is berthed. The sail surface enabling the vessel to make headway when it is under way remains subject to the forces exerted by the wind when the vessel is docked, which can be harmful for the vessel.

Thus, in view of the known solutions, there is a need for a sail structure which can be placed in a neutral non-propulsive position in a robust and space-saving manner when propulsion is not desired, for example when the vessel is docked.

### SUMMARY OF THE INVENTION

In view of the disadvantages and limitations with the prior art solutions, it is an aim with the present invention to provide a marine vessel with a wind-assisted propulsion arrangement, which at least partially solves the problems with the known solutions especially relating to arranging a sail structure in a neutral non-propulsive position in a robust and space-saving manner, when propulsion is not desired.

However, it has been additionally noted that since the rigid sails cannot be reefed and the telescopic solutions may not be sufficiently robust in harsh weather conditions, stowing of large rigid airfoil structures in a space-saving manner has been found to be a challenge. Therefore, it has been noted that there is a need to provide efficient and robust stowing of rigid wingsails in a space saving manner. It is therefore a further aim with the present invention to provide stowing of large rigid airfoil structures in a space saving manner.

The above aims are attained by the present invention as defined in the appended independent claims.

According to a first aspect of the invention, the present invention relates to a wingsail structure for a wind-assisted propulsion arrangement of a marine vessel and comprises a wingsail frame. The wingsail frame comprises a main wingsail, a flap and at least one upper and at least one lower coupling member connecting the main wingsail and the flap. The main wingsail is rigid or semi-rigid and has an aerofoil shape with a leading edge, a trailing edge, a top end and a bottom end and side walls extending therebetween. The flap is also rigid or semi-rigid flap and has an aerofoil shape with a leading edge, a trailing edge, a top end and a bottom end, and side walls extending therebetween. The flap may be smaller than the main wingsail. The wingsail structure further comprises a foundation arranged to be fixed to a body of the vessel. The foundation is associated with the wingsail frame such that the wingsail frame is rotatable in respect to the foundation via a first vertical axis of rotation. The upper and lower coupling members are configured to bring the main wingsail and/or the flap to a first unfolded standing position, and to bring the main wingsail and/or the flap towards one another to a second folded standing position. The wingsail structure further comprises a tilting arrangement configured to bring the wingsail frame from the second folded standing position to a third tilted position in respect to the foundation.

Since the flap and/or the main wingsail can be brought to a folded position before tilting the wingsail frame, stowing can be provided in a space-saving manner.

According to an aspect, the upper and lower coupling members are configured to provide a second axis of rotation for rotating the flap in respect to the upper and lower coupling members. The upper and lower coupling members may be further configured to provide a third axis of rotation for rotating the main wingsail in respect to the upper and lower coupling members. This may further improve the adjustment of a camber provided by the wingsail frame.

The upper and lower coupling members may be connected to the respective top end and a bottom end of the main wingsail, and the flap and the lower coupling member is configured to provide the first axis of rotation for rotating the wingsail frame in respect to the foundation. Thus, when the coupling members are rotated in respect of the foundation, the whole wingsail frame can be rotated.

According to a further aspect, the upper and lower coupling members are configured to provide a fourth axis of rotation associated with the main wingsail for rotating the flap in respect to the main wingsail. In this way the flap can be rotated also when it faces towards the same direction as the main wingsail and can thus be moved beside the main wingsail, and thus provides means configured to move the flap such that it faces the main wingsail in the same or opposite direction. Therefore, the transversal extension of the folded wingsail frame can further reduce the transversal extension compared to an unfolded wingsail frame, and thereby further limit the space required by the wingsail frame when in a tilted or stowed position.

The upper and lower coupling members can be connected to the respective top end and a bottom end of the main wingsail and the flap. In this way, e.g. accessibility to react the coupling members may be facilitated.

The upper and lower coupling members may be connected at a distance from the respective top end and a bottom end. In this way, they can be directly connected to the respective main wingsail and the flap.

According to an aspect, in the third tilted horizontal stowage position, the wingsail frame is arranged in a horizontal position in which a side wall extending between the leading edge and trailing edge of the respective main wing and flap faces the body of the vessel. In this way a robust stowage position is provided.

According to another aspect, in a third tilted vertical stowage position, the wingsail frame is arranged in a vertical position in which the leading edge or the trailing edge of the main wingsail faces the body of the vessel and the trailing edge or the leading edge of the flap faces the body of the vessel.

The main wingsail and the flap, respectively, may comprise one or more semi-rigid or rigid modules detachably connected to each other to form an integrated main wingsail or flap with the aerofoil shape. Thus, a modular concept enables for example for assembly of the wingsail frame close to or onboard a vessel where it is mounted.

The present invention also relates to a wingsail frame comprising a main wingsail, a flap and at least one upper and at least one lower coupling member connecting the main wingsail and the flap. The main wingsail is rigid or semi-rigid and has an aerofoil shape with a leading edge, a trailing edge, a top end and a bottom end and side walls extending therebetween. The flap is also rigid or semi-rigid flap and has an aerofoil shape with a leading edge, a trailing edge, a top end and a bottom end, and side walls extending therebetween. The flap may be smaller than the main wingsail. The upper and lower coupling members are configured to bring the main wingsail and/or the flap to a first unfolded standing position, and to bring the main wingsail and/or the flap towards one another to a second folded standing position. The upper and lower coupling means are further configured to provide a second axis of rotation for rotating the flap in respect to the upper and lower coupling members and a third axis of rotation for rotating the main wingsail in respect to the upper and lower coupling members. Further, the upper and lower coupling members are connected to the respective top end and a bottom end of the main wingsail, and the flap and the lower coupling member is configured to provide the first axis of rotation for rotating the wingsail frame in respect to the foundation. Since the flap and/or the main wingsail can be brought to a folded position, stowing can be provided in a space-saving manner, while the adjustment of a camber provided by the wingsail frame is more flexible. The present invention further relates to a wingsail structure comprising the wingsail frame and a foundation connected to a body of a marine vessel.

The present invention also relates to a further wingsail frame comprising a main wingsail, a flap and at least one upper and at least one lower coupling member connecting the main wingsail and the flap. The main wingsail is rigid or semi-rigid and has an aerofoil shape with a leading edge, a trailing edge, a top end and a bottom end and side walls extending therebetween. The flap is also rigid or semi-rigid flap and has an aerofoil shape with a leading edge, a trailing edge, a top end and a bottom end, and side walls extending therebetween. The flap may be smaller than the main wingsail. The upper and lower coupling members are configured to bring the main wingsail and/or the flap to a first unfolded standing position, and to bring the main wingsail and/or the flap towards one another to a second folded standing position. The upper and lower coupling members are further configured to provide a fourth axis of rotation associated with the main wingsail for rotating the flap in respect to the main wingsail. In this way the flap can be rotated also when it faces towards the same direction as the main wingsail and can thus be moved beside the main wingsail, and thus provides means configured to move the flap such that it faces the main wingsail in the same or opposite direction. The present invention further relates to a wingsail structure comprising the wingsail frame and a foundation connected to a body of a marine vessel.

Further, the present invention relates to a wind-assisted propulsion arrangement comprising at least one wingsail structure as defined above, and to a marine vessel comprising the wind-assisted propulsion arrangement.

### BRIEF DESCRIPTION OF THE DRAWINGS

Further features and advantages of the present invention will be described with reference to the appended drawings in which:
Fig. 1a illustrates a marine vessel comprising a wind-assisted propulsion arrangement in a perspective view,
Fig. 1b illustrates an embodiment of a wingsail structure comprised in the wind-assisted propulsion arrangement in a standing unfolded propulsive position (I) in a perspective view,
Fig. 2a illustrates the embodiment of Fig. 1b in a standing unfolded propulsive position (I) from above,
Fig. 2b illustrates the embodiment of Fig. 2a from above in a standing folded position (IIa).
Fig. 3 illustrates a marine vessel comprising the wingsail structure of the wind-assisted propulsion arrangement in a standing folded position (IIa) in a perspective view,
Fig. 4 illustrates the wingsail structure of the wind-assisted propulsion arrangement in a folded and tilted horizontal position in a perspective view,
Fig. 5a illustrates the wingsail structure of the wind-assisted propulsion arrangement in a folded and tilted vertical position in a perspective view,
Fig. 5b illustrates the wingsail structure of Fig. 5a in more detail.
Fig. 5c illustrates the wingsail structure of Fig. 5a seen from a bottom end view.
Fig. 6 illustrates another embodiment of a wingsail structure comprised in the wind-assisted propulsion arrangement in a standing unfolded propulsive position (I) in a perspective view,
Fig. 7a illustrates the embodiment of Fig. 6 from above,
Fig. 7b illustrates the embodiment of Fig. 6 from above in a standing folded position (IIa),
Fig. 7c illustrates the embodiment of Fig. 6 from above in an embodiment of a standing folded position (IIb),
Fig. 8a illustrates yet another embodiment of a wingsail structure in a standing unfolded propulsive position (I) in a perspective view,
Fig. 8b illustrates the embodiment of Fig. 8a from above,
Fig. 8c illustrates the embodiment of Fig. 8a from above in a standing folded position (IIa),
Fig. 9 illustrates a marine vessel comprising the wingsail structure of Fig. 6 of the wind-assisted propulsion arrangement in a standing folded position (IIa) in a perspective view,
Fig. 10 illustrates the wingsail structure of the wind-assisted propulsion arrangement in a folded and tilted horizontal position in a perspective view,
Fig. 11a illustrates the wingsail structure of the wind-assisted propulsion arrangement in a folded and tilted vertical position in a perspective view,
Fig. 11b illustrates the wingsail structure of Fig. 11a in more detail
Fig. 11c illustrates the wingsail structure of Fig. 11a seen from a bottom end view below.
Fig. 12 illustrates schematically a tilting arrangement and a rotating arrangement for the wingsail frame.

### DETAILED DESCRIPTION

In order to utilize wind as power for ship propulsion, the wingsails are formed so that they can in itself or together with an engine of the vessel generate sufficient propulsive forces to overcome the ship resistance forces. In this application, a wingsail is generally defined as a rigid or semi-rigid structure, which may be similar to an aircraft wing, and which can be fixed vertically on a marine vessel to provide propulsive force from the action of the wind. When such rigid wingsails are or cannot be used due to for example rough weather, limitation in height in the chosen route or during cargo operation, safety aspects should be ensured.

According to the present invention, a double wingsail configuration, herein referred to as a wingsail frame, comprising a main wingsail and a flap is provided. By folding the flap onto the main wingsail, a more compact wingsail position can be obtained. At the same time, when in use, the flap can be rotated along one or multiple vertical rotation axis/axes in respect of the main wingsail to provide a camber providing propulsive force. By providing a flap, which is rotatable in respect of the main wingsail it is possible to adjust the amount of generated power by adjusting the camber formed by the main wingsail and a flap. Since the flap can be folded towards the main wingsail, a projected area of a wingsail frame can be reduced. Thus, also the space required by the wingsail frame is reduced on board a vessel. When the main wingsail and the flap are folded, also the generated forces can be reduced. In this way, a minimum power configuration can be obtained in desired conditions, which may be important for vessel safety, structural integrity and operability.

To prevent propulsion provided by the wingsails, the wingsail frame can be tilted horizontally towards the deck to a tilted position. By "tilted" position is meant a position in which the wingsail frame is inclined towards a horizontal position and/or can lean towards a deck of the vessel or towards a support on the deck. The wingsail frame can be stowed in this position and the position is herein also referred to as a stowage position. In the tilted position and when the main wingsail and the flap are in a folded position, space can be saved on the deck of the vessel compared to the main wingsail and the flap not in a folded position. This is also illustrated in the appended drawings.

To provide the tilted position the wingsail frame is tilted in respect of a horizontal axis from a vertical standing position towards a horizontal position. The wingsail frame has longitudinal axis, which extends in a vertical direction in respect of the vessel deck when the wingsail frame is in a standing position. The wingsail frame is thus tilted in respect of the horizontal rotation axis, which is perpendicular to the longitudinal axis and thus essentially horizontal or transversal. In the tilted position, the longitudinal axis of the wingsail frame can be thus essentially horizontal. However, tilted wingsails require large space on a deck of a marine vessel, which can be difficult to find. It is therefore essential to minimize the needed space as much as possible to enable installation of the wingsail arrangements, which may comprise a plurality of wingsail structures, on different types of vessels. The present invention additionally provides a solution to minimizing space required when the wingsail is provided in the tilted position.

According to the present invention to minimize the space required, the wingsail and the flap are brought from a first unfolded standing position, in which the wingsail and flap provide propulsive forces to the vessel, to a second folded standing position. By folded standing position is meant that the main wingsail and/or the flap are rotated in respect of one or multiple vertical axis/axes towards one another. The vertical axis is essentially parallel to the longitudinal axis of the wingsail frame in the standing position. When located towards one another, the main wingsail and the flap are in an overlapping position when looking in a transversal plane, i.e. directly in front of the wing structure. The wingsail frame is then tilted in respect of a transversal or horizontal rotation axis, which is perpendicular to the vertical rotation axis, and is tilted towards the deck of the vessel. The folding can be obtained by for example rotating the flap to overlap the main wingsail. In this way, the wingsail frame may be stowed in a neutral, non-propulsive, position. Further, a transversal extension of the wingsail frame is reduced compared to when the wingsail frame is in a propulsive standing position when the main wingsail and flap are folded. This is a huge advantage, since the space onboard a marine vessel is limited. The wingsail frames are typically, but not necessarily, folded in an upright position before the wingsail frame is tilted. Further advantage is that the lifting force from wind will be reduced which can be useful in strong winds to reduce the stress on the components. The wingsail can be tilted down on deck and stored either flat or in an upright position.

The wingsail structure, which comprises the wingsail frame and a foundation, and an arrangement comprising one or more wingsail structures can be used in a marine, or maritime, i.e. a vessel which is used as a means of transportation on water. The main wingsail and the flap are substantially made of a rigid or semi-rigid material and have an aerofoil shape. Both the main wingsail and the flap have sidewalls, a leading edge and a trailing edge and a top end and a bottom end. By "rigid" material is meant a material, which may be a composition of several materials, that is not foldable and can support its own weight when rested upon parallel edges of such materials. "Semi-rigid" material is a material which is partly rigid and has some degree of flexibility but can still support its own weight when rested upon parallel edges of such materials.

By "aerofoil" shape is in this application meant a wing profile having an aerodynamic shape when looked in a transverse section in the fore-to-aft direction, i.e. from a leading edge to a trailing edge direction. The aerodynamic aerofoil shape is advantageous, since it lets the air to pass over wingsail more easily. The shape may be asymmetric in said direction, but it can involve symmetric sections, or the shape may be a symmetric aerofoil. The aerofoil shape may be for example defined according to NACA standardized series, but the shape is not limited thereto.

For better understanding of the invention of the present disclosure, it will now be described with reference to the appended drawings, which are provided to illustrate non-limiting example embodiments of the invention.

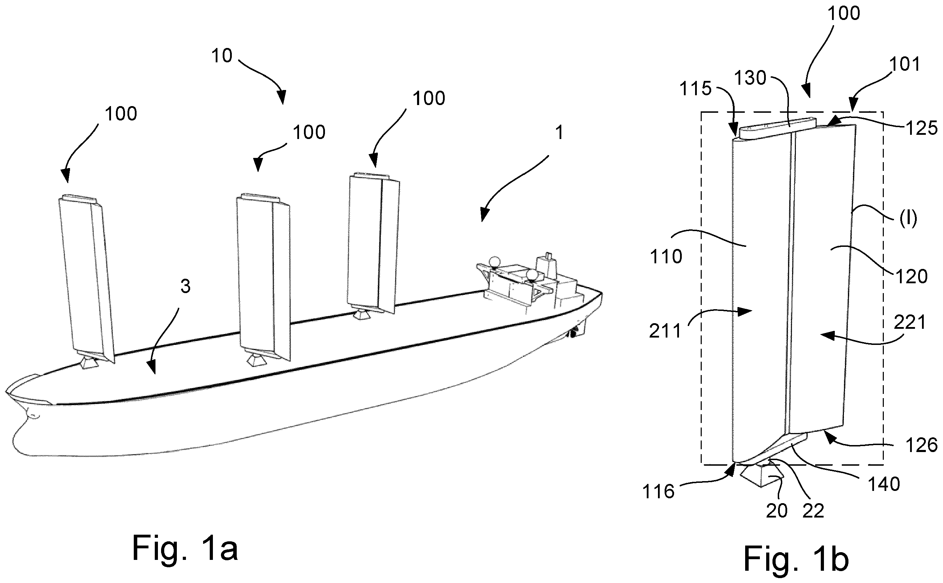

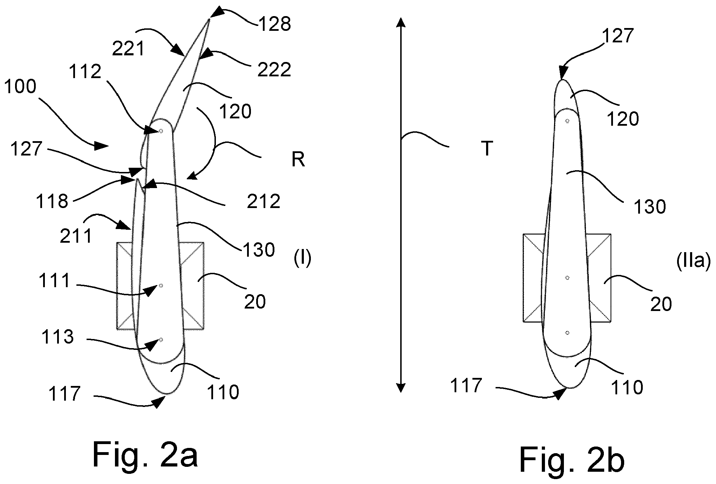

Referring to Fig. 1a, a marine vessel 1 comprising a wind-assisted propulsion arrangement 10 with three wingsail structures 100 is shown. Each of the wingsail structures 100 comprises a wingsail frame 101, schematically shown by a rectangle with dotted lines in Fig. 1b. Both the main wingsail 110 and a flap 120 are rigid or semi-rigid, meaning that there is a certain degree of flexibility. The wingsail structure is further shown from above in Fig. 2a and 2b, also referred to herein.

The wingsail structure 100 further comprises a foundation 20, which is arranged to be fixed to a body 3 of the vessel 1. The foundation 20 is associated with the wingsail frame 101 such that it supports the frame when the wingsail frame is in an upright, vertical standing position, either in a propulsive position (I) or in the folded position (IIa; IIb). The foundation may also be associated with the wingsail frame when it is brought to a tilted position (IIIa; IIIb).

In the first unfolded standing position (I) illustrated in Fig. 1a, the wingsail frame is arranged in a first, standing, propulsive position (I). The propulsive force provided by the main wingsail and the flap can be varied by altering the camber, i.e. the convexity of the curve of the main wingsail and the flap form from the leading edge of the main wingsail to the trailing edge of the flap. Fig. 2a illustrates in a view from above an example of a camber in the first propulsive standing position (I).

Both the main wingsail 110 and the flap 120 have an aerofoil shape. The main wingsail has a leading edge 117, a trailing edge 118 (Fig. 2a), a top end 115 and a bottom end 116 (Fig. 1b), and side walls 211 and 212 extending therebetween (Fig. 2a). In a similar way, the flap 120 has a leading edge 127 and a trailing edge 128 (Fig. 2a) and a top end 125 and a bottom end 126 (Fig. 1b), and side walls 221 and 222 extending therebetween (Fig. 2a). The shape of the aerofoil has generally a tapering shape from the leading edge towards the trailing edge.

The side walls 221 and 222 are integrated to form the aerofoil shape with the leading edge 127 and the trailing edge 128. The side walls 221 and 222 and the top and bottom ends 115, 116 may be formed of modules attached to each other permanently or detachably and the modules together form the integrated wingsail or flap with the aerofoil shape. The wingsail and flap profiles can be designed in different modular elements which can be combined to achieve different size of wing sails. The main wingsail and the flap may comprise any suitable material, such as a moldable polymeric material, glass fiber material, carbon fiber material and/or a composite material, but is not limited thereto.

The wingsail frame 101 further comprises an upper coupling member 130 and a lower coupling member 140, which are configured to rotatably connect the main wingsail 110 and the flap 120 in respect to each other. By rotatably connected is meant that the main wingsail 110 and/or the flap 120 can be rotated around a vertical axis towards one another, which vertical axis is parallel to the longitudinal axis of the wingsail frame. In Fig. 2a this is illustrated by an arrow R showing how the flap 120 can be rotated from a first unfolded standing position (I) around the second vertical rotation axis 112 towards the main wingsail 110 to a second folded standing position (Ila) shown in Fig. 2b. In this variant, the second axis of rotation 112 in the upper and lower coupling members 130, 140 is arranged such that the trailing edge 128 of the flap 120 is rotatable towards the leading edge 117 of the main wingsail 110. In this second folded position (Ila) the side wall 222 on the right-hand side of the flap is folded towards the side wall 212 on the right hand side of the main wingsail 110. By folding the flap towards the main wingsail, as illustrated in Fig. 2b, the transversal extension T, which is shown between Fig. 2a and 2b, of the wingsail frame 101 can be reduced. The rigid or semi-rigid main wingsail 110, flap 120 and the upper and lower coupling members 130, 140 form the frame 101 for the wingsail structure 100.

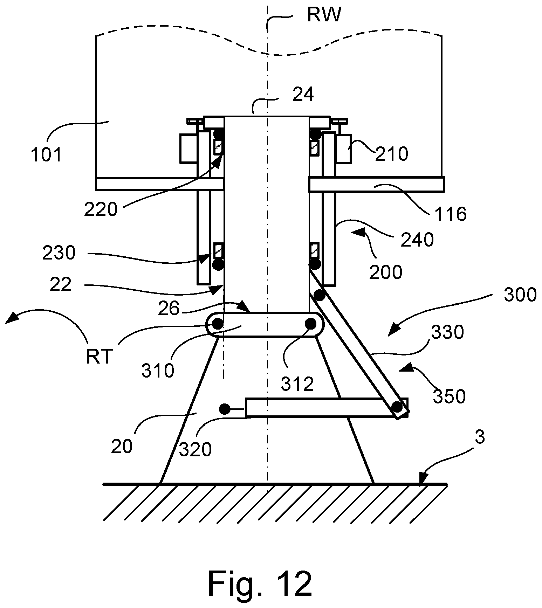

The wingsail frame can be connected to the foundation 20 for example via a shaft 22 (Fig. 1b) defining a first axis of rotation 111 (Fig. 2a) The wingsail frame 101 can rotate in respect to the foundation 20 via this first axis of rotation. A non-limiting schematical example of a rotating arrangement 200 suitable for rotating the wingsail frame 101 is shown in Fig. 12. Fig. 12 shows a simplified schematical illustration of the wingsail frame without the flap and not in scale. The rotating arrangement 200 is associated with the shaft 22, which is connected to the foundation 20 via an associated tilting arrangement 300 explained more in detail below. The shaft 22 is connected to the wingsail frame 101 via the bottom end 140 of the main wingsail 110 and may pass through the bottom end 140.

In the shown non-limiting example, the shaft 22 is in its upper end 24 housed in the interior of the main wingsail 110. The shaft end 24 is connected to a drive arrangement 210 for the rotation of the wingsail frame 101 in respect of a longitudinal rotation axis RW, which extends in a vertical direction V in respect of the deck of the vessel body 3. The drive arrangement 210 may be comprise an electrical motor (not shown) or any other suitable driving means including manual crank arms. The shaft 22 is also associated with applicable upper bearings 220 and lower bearings 230 housed in a housing 240. The wingsail frame is rotated around the shaft 22 by means of the drive arrangement and by the upper and lower bearings, e.g. rolling bearings.

Generally, the main wingsail, the flap and the upper and lower coupling means may comprise suitable arrangement configured to provide the rotating movement in respect of the rotation axes, and may comprise e.g. shafts, bearings e.g. roller bearings and drive means. The rotation of the wingsail frame, main wingsail and/or the flap can be controlled by incorporating e.g. electrically controllable means to each rotation axis. A control unit can then be connected to the drive arrangement to regulate the rotation of the wingsail frame, main wingsail and/or the flap. The degree of rotation of the wingsail frame, main wingsail and/or the flap is adapted to prevailing surrounding conditions. The rotating arrangement and each of the vertical rotation axes for the main wingsail and flap can be arranged with stop means so that the degree of rotation is angularly limited to a certain degree. By limiting the rotation degree, uncontrolled rotation of the parts of the wingsail frame can be avoided, for example in case of change in the prevailing wind/weather conditions.

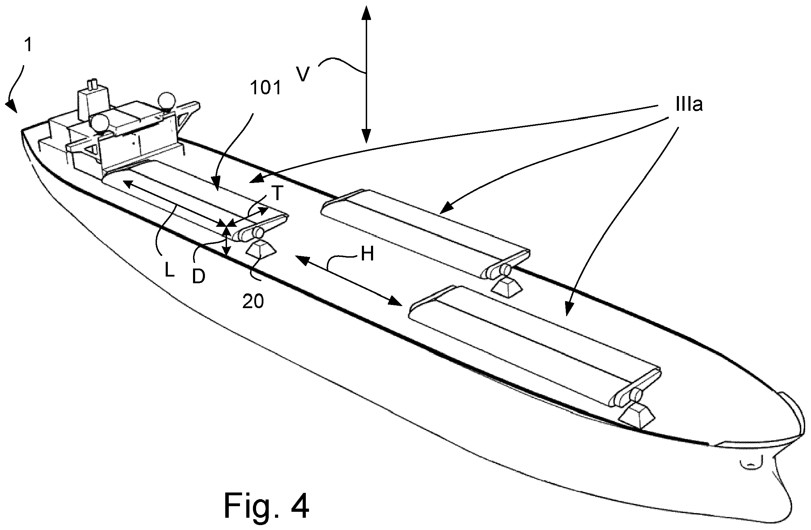

According to the present invention, a space saving, tilted stowage position (IIIa, IIIb) can be obtained for the wingsail frame 101, when the flap 120 is folded towards the main wingsail 110, and the wingsail frame 101 is brought to a third, tilted, stowage position (IIIa) as illustrated in for example Fig. 4, 5a, 10 and 11a. The tilted position may be a substantially horizontal position in respect to the deck of the vessel and in which the wingsail frame lies towards the deck.

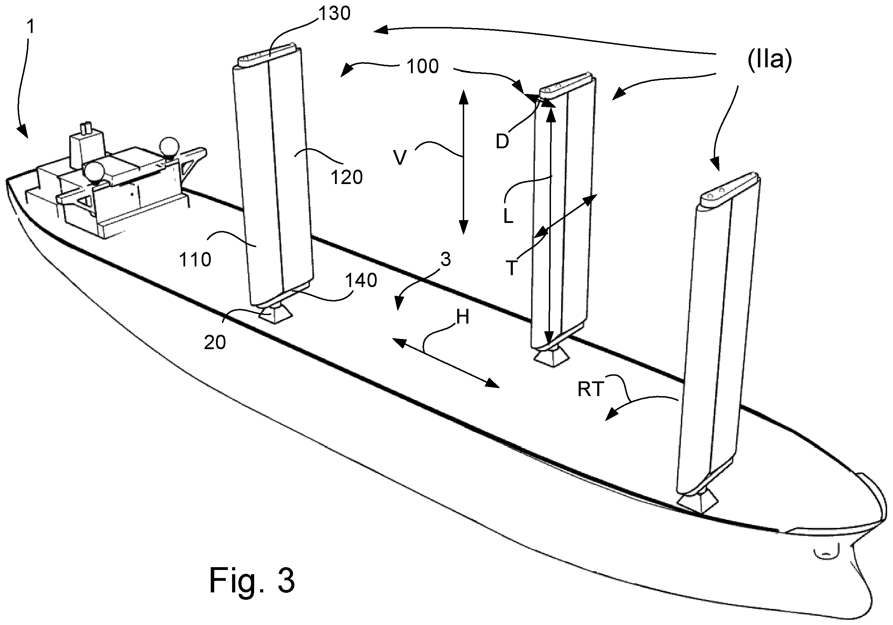

Reference is now made to Fig. 3, in which the wingsail structures 100 are shown in the second, folded standing position (IIa). In the standing position, the longitudinal axis L of the wingsail structure (shown only in connection with one structure 100) is essentially parallel with a general vertical axis V, which is perpendicular to a horizontal axis H of the vessel 1. The horizontal axis H can extend substantially in the same direction as the deck floor. The wingsail structure also has an extension in a depth direction D, which is perpendicular to the plane formed by the two-dimensional longitudinal L and transversal T directions. The extension in the depth direction may increase when the flap is folded towards the main wingsail.

To provide the tilted position illustrated in Fig 4, the wingsail frame 101 having the longitudinal axis L extending in a vertical direction V when the wingsail frame is in a standing position IIa, is tilted around a transversal rotation axis RT, which is perpendicular to the longitudinal axis L and thus essentially horizontal. The arrow RT illustrates the direction of the tilting in respect of the rotation axis RT and is shown in Fig 3, and in Fig 12. In the tilted position, the longitudinal axis L of the wingsail frame is thus essentially parallel with the horizontal axis H or nearly parallel. The tilting can be obtained by a tilting arrangement 300 comprised in the wingsail structure 100.

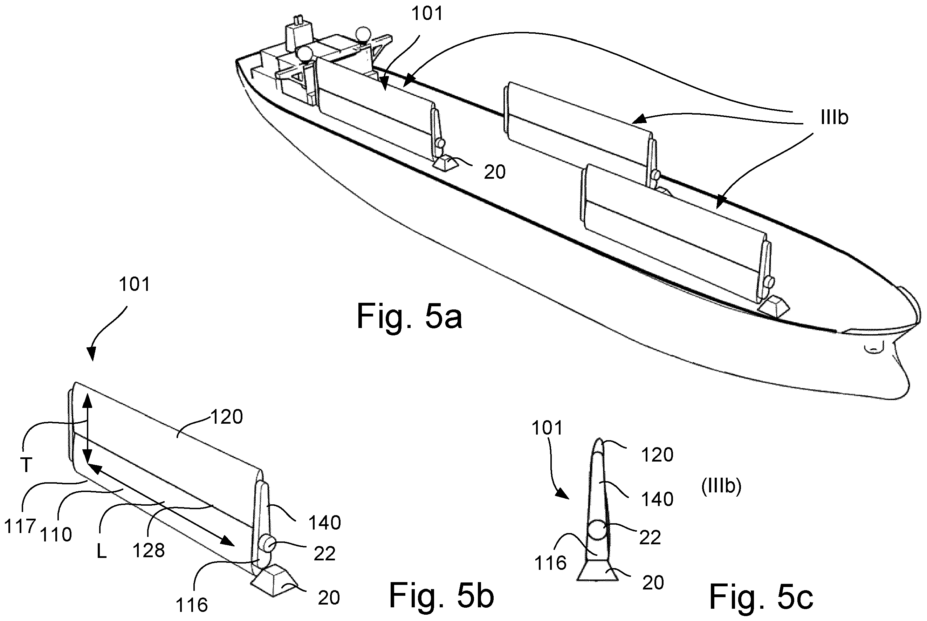

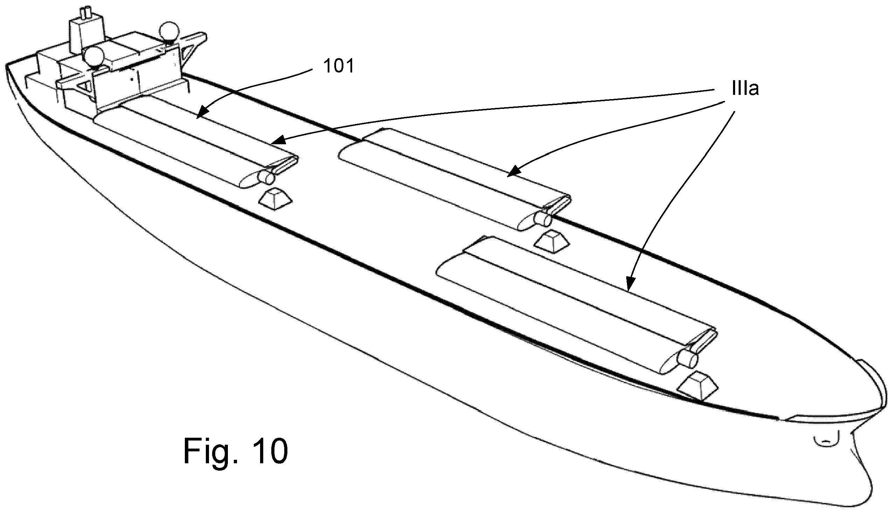

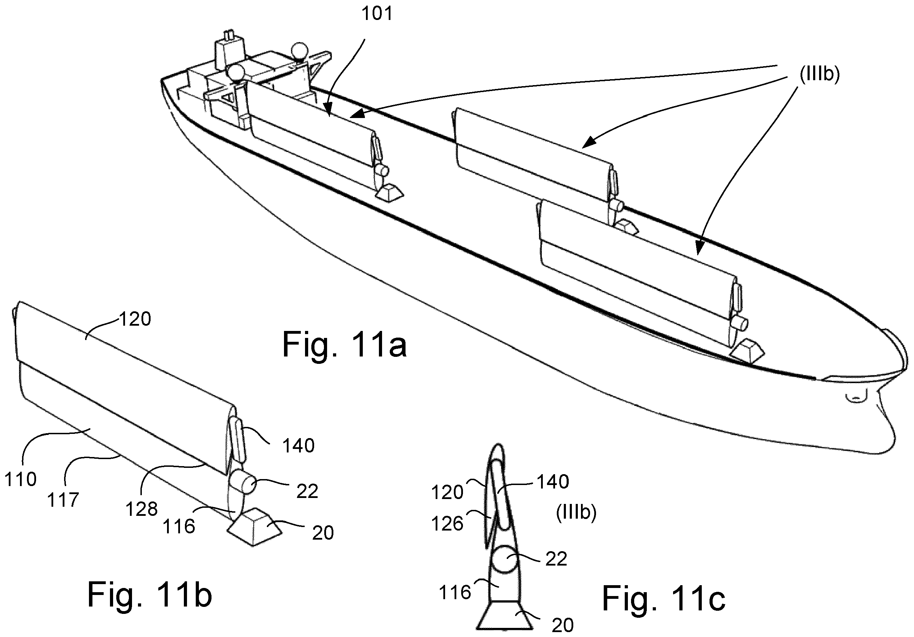

A non-limiting schematical example of the tilting arrangement 300 suitable for bringing the wingsail frame 101 from the second, standing position (II) to a third tilted stowage position (IIIa) is shown in Fig. 12. The tilting arrangement 300 is associated with the foundation 20 and the shaft 22, which is connected to the wingsail frame 101 via the main wingsail 110. The shaft 22 is in its lower end 26 connected to a tilting means 310 having a rotation axis RT in respect of which the wingsail frame 101 can be tilted in the direction shown by the arrow RT. The tilting means 310 is in turn connected to the foundation 20 via the rotation axis RT. The tilting means 310 further comprises a locking means 312, which prevents the tilting and fixes the shaft 22 and thus the wingsail frame 101 to a standing position. The locking means is released, when the wingsail frame 101 is to be tilted. The tilting arrangement 300 further comprises a tilting drive 350 comprising a tilting cylinder 320 connected to the foundation 20. The tilting cylinder may be e.g. a hydraulic or pneumatic cylinder. On its second end, the tilting cylinder is rotatably connected to a moment shaft 330, which is further connected to the shaft 22. When the wingsail frame is to be tilted, the locking means is released. By driving the extension of the cylinder 320, the moment shaft 330 pushes the shaft 22 to rotate in respect of the rotation axis RT. In this way, the wingsail frame 101 connected to the shaft 22 is tilted in respect of the rotation axis RT to the tilted position IIIa, in which the wingsail frame is stowed in a horizontal position, i.e. so that a side wall 211 or 212 of the main wingsail and the side wall 221 or 222 of the flap are facing towards the body of the vessel 3 and as shown in Fig. 4 and Fig. 10. Alternatively, the tilting arrangement can be arranged to tilt the wingsail frame to a vertical upright position, in which the leading edge 117 or trailing edge 118 of the main wingsail 110 and the leading edge 127 or the trailing edge 128 of the flap faces towards the body of the vessel 3 and as shown in Fig. 5b and 11b. In this tilted vertical position IIIb, which is shown enlarged in Fig. 5b and 11b and in a view from bottom of the wingsail frame 101 in Fig. 5c and 11c the longitudinal axis L of the wingsail frame 101 is substantially parallel with the horizontal extension H of the body of the vessel 3. The transversal axis T of the wingsail frame 101 is instead parallel with the vertical axis V in respect to the horizontal extension of the body 3 of the vessel. In this third vertical tilted position (IIIb), the footprint of the wingsail structure 100 on the deck of the vessel can be further decreased, which is a huge advantage. The vertical tilted position (IIIb) can be obtained also by rotating the tilted wingsail structure 101 from the horizontal tilted position (Illa) shown in Fig. 4 to the vertical tilted position (IIIb). Another variant is to arrange the wingsail structure with means that enable rotation of the wingsail frame around its longitudinal axis (I) during the tilting. Alternatively, the wingsail frame may be rotated from a horizontal to a vertical storage position, or vice versa, when it is tilted.

It should be noted that in the drawings Fig, 4, 5a-5c, 10 and 11a-11c that illustrate the vertical tilted positions (IIIb), the foundation is separated from the shaft 22 due to illustration means. However, it is clear that the foundation 20 and the shaft 22 may be connected to each other also when tilted, for example via the tilting means 310, which is the case when using the above-described tilting arrangement 300. Additionally, or alternatively, other connecting means or additional rotation meanscould be used.

Returning to Fig. 1a, 1b and 2a and 2b, an embodiment of the wingsail frame according to the invention with upper and lower coupling members 130, 140 is shown more in detail. Each of the upper and lower coupling members 130, 140 in the shown embodiment are configured to provide a second axis of rotation 112 for rotating the flap 120 in respect to the upper and lower coupling members 130,140. In the shown embodiment, the upper and lower coupling members 130, 140 are additionally configured to provide a third axis of rotation 113 for rotating the main wingsail 110 in respect to the upper and lower coupling members 130, 140. Further, the upper and lower coupling members 130, 140 are connected to the respective top end 115, 125 and a bottom end 116, 126 of the main wingsail 110 and the flap 120. The lower coupling member is configured to provide the first axis of rotation 111 for rotating the wingsail frame 101 in respect to the foundation 20. The first axis of rotation 111 is offset of the third axis of rotation 113 for rotating the main wingsail 110. The first axis of rotation 111 is located between the third axis of rotation 113 and the second axis of rotation 112. Each of the first, second and third axes of rotation extends in the longitudinal direction L of the wingsail frame 101. Any commercially known means for providing the rotation axes can be used, such as commercially known shafts, bearings, etc. By having the first 111, second 112 and third 113 axes of rotation as independent rotation axes, the loads can be transferred from the wingsail profiles to the vessel interface.

The upper and lower coupling members 130, 140 may have a substantially similar shape, which extends from a point in proximity of the third axis of rotation 113, located in proximity of the leading edge 117 of the main wingsail 110, to a point in proximity of the second axis of rotation 112, located in proximity of the leading edge 127 of the flap 120. The shape of the coupling members may resemble a shape of an aerofoil or may have another shape accommodating to the transversal T and depth D extension of the coupling members and may thus be tapering in a direction from the main wingsail towards the flap. By providing the three individual rotating axes associated with the upper and lower coupling members, a robust connection of the main wingsail and flap is obtained while a flexible and fine adjustment of e.g. a camber provided by the wingsail frame is obtained.

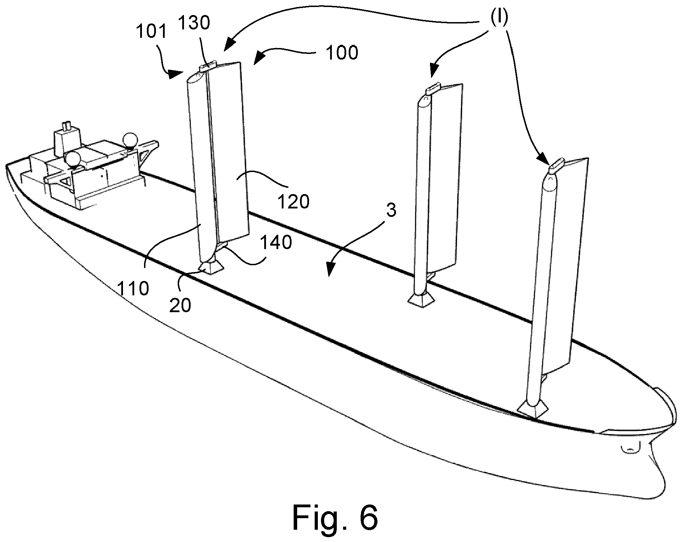

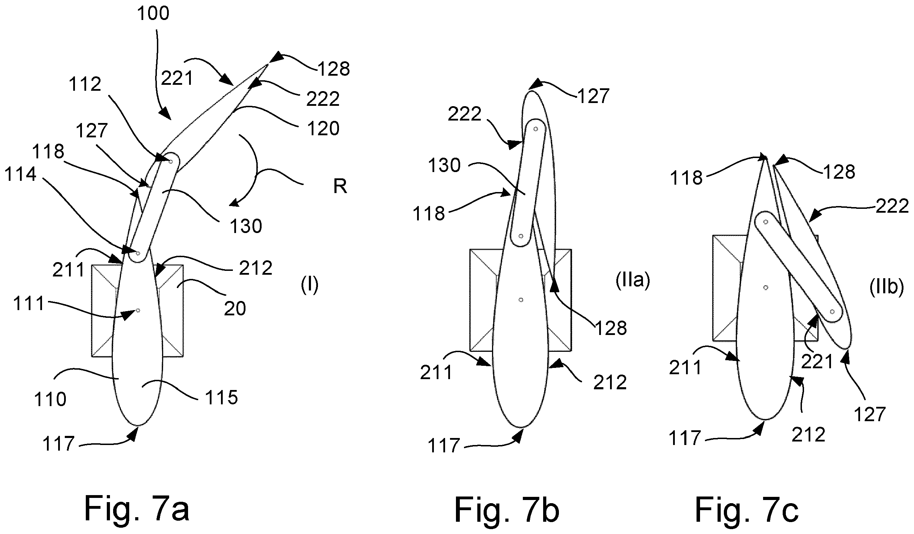

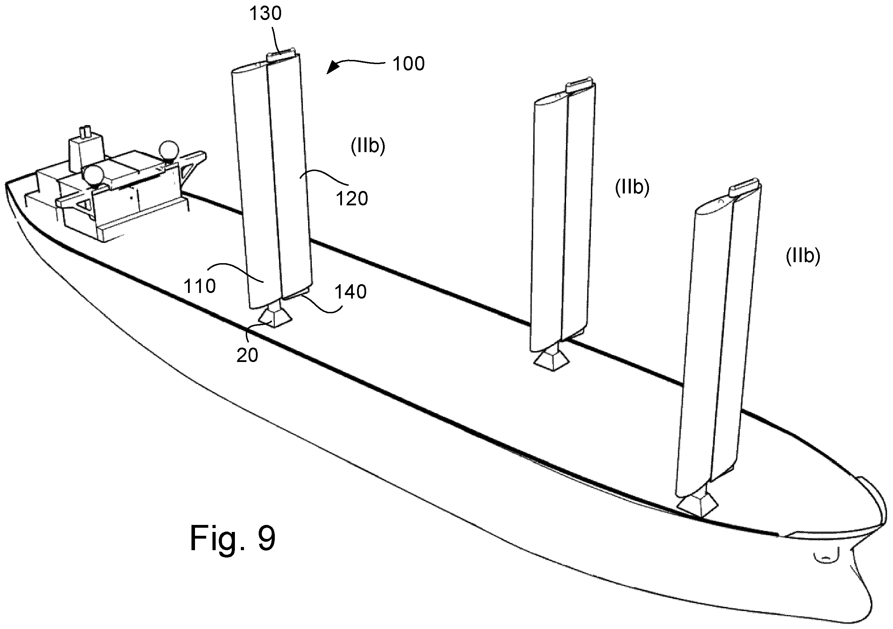

Reference is now made to another embodiment of the wingsail frame shown in Fig. 6-11c. In an analogous manner as in connection with Fig. 1a, a marine vessel 1 comprising a wind-assisted propulsion arrangement 10 with three wingsail structures 100 is shown. Each of the wingsail structures 100 comprises a wingsail frame 101, shown in more detail from above in Fig. 7a, 7b and 7c. The main wingsail 110 and a flap 120 are rigid or semi-rigid, meaning that there is a certain degree of flexibility, and are similar to the main wingsail and the flap already described in connection with Fig. 1a-Fig 2b, and reference is made to the description above in this respect.

The wingsail frame 101 the embodiment of Fig. 6-10 differs from the one in Fig. 1a-Fig 2b in respect of the shape and function of the upper coupling member 130 and the lower coupling member 140, which are configured to rotatably connect the main wingsail 110 and the flap 120 in respect to each other. In the embodiment of Fig. 6-10c, the upper and lower coupling members 130, 140 are in addition to being configured to provide a second axis of rotation 112 for rotating the flap 120 in respect to the upper and lower coupling members 130, 140, also configured to provide a fourth axis of rotation 114 for rotating the flap 120 in respect to the main wingsail 110.

The fourth axis of rotation 114 is associated with the main wingsail 110 to enable the rotation of the flap 120 in respect the main wingsail 110. At the same time the upper and lower coupling members 130, 140 may not be configured to provide the first rotation axis 111 for rotation of the wingsail frame in respect to the foundation. Instead, the first rotation axis 111 is associated with the shaft 22 connected to the bottom end 116 of the main wingsail 110, for example as shown in Fig. 5b, 5c, 11b, 11c and 12 in connection with the rotation arrangement 200. Thus, when the main wingsail 110 is rotated around the first rotation axis, the whole wingsail frame rotates. The coupling members 130, 140 may in this embodiment comprise a link arm rotatable around the second axis of rotation 112 and fourth axis of rotation 114.

Fig. 7a illustrates a the wingsail structure 100 in a view from above, when the wingsail frame is arranged in a first unfolded, propulsive, standing position (I). As can be seen, the main wingsail 110 and the flap form a camber having a convex arc-shape to provide a desired propulsion force. The flap 120 can be rotated from a first unfolded standing position (I) in respect of a second vertical rotation axis 112, as shown by an arrow R in Fig. 7a, towards the main wingsail 120 to a second folded standing position (IIa) as shown in Fig. 7b. In this second folded position (IIa) the side wall 222 on the right-hand side of the flap 120 is folded towards the side wall 212 on the right-hand side of the main wingsail 110, but the flap 120 could be alternatively folded in the opposite direction so that the side wall 221 of the flap 120 is folded towards the sidewall 211 of the main wingsail 110. In this second folded position (Ila), the flap 120 faces the main wingsail 110 in an opposite direction, i.e. the leading edge 127 of the flap faces substantially opposite direction compared to the leading edge 117 of the main wingsail 117. By folding the flap towards the main wingsail, the transversal extension T of the wingsail frame 101 can be reduced.

Fig. 7c shows a further variant of folding obtained by the fourth axis of rotation 114 which is provided in the upper and lower coupling members 130, 140. The flap 120 can be rotated from the first unfolded standing position (I) around a second vertical rotation axis 112 also in a counter clockwise (or clockwise) direction compared to the clockwise direction shown by the arrow R in Fig. 7a. At the same time, the upper and lower coupling means 130, 140 are rotated in respect of the fourth rotation axis 114 in the clockwise direction so that the flap is rotated with the side wall 221 facing towards the side wall 212 of the main wingsail. Also, the trailing edges 117 and 127 of the main wingsail and the flap 117 are brought into proximity of each other. In this second folded position (IIb), the flap 120 faces the main wingsail 110 in the same direction. The transversal extension T of the wingsail frame 101 can be further reduced by this second folded position (IIb) compared to the second folded position (IIa).

By the "same direction" is meant the principal alignment of the main wingsail and the flap, i.e. that the leading and trailing edges are mainly pointing at a direction within 90 degrees.

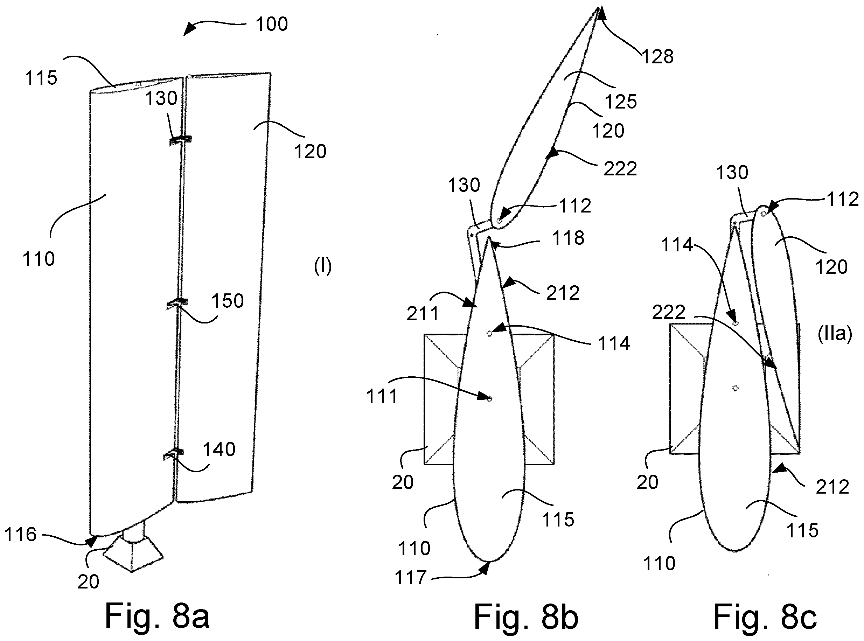

Reference is now made to a further embodiment of the wingsail frame shown in Fig. 8a-8c. In an analogous manner as in connection with Fig. 1a, the wingsail structure 100 comprises a wingsail frame 101 comprising a main wingsail 110 and a flap 120, which are rigid or semi-rigid, and are similar to the main wingsail and the flap already described in connection withFig. 1a-Fig 2b and reference is made to the description above in this respect.

The wingsail frame 101 of the embodiments shown in Fig. 6-10c differ from the one in Fig. 1a-Fig 2b mainly in respect of the shape and function of the upper coupling member 130 and the lower coupling member 140, which are configured to rotatably connect the main wingsail 110 and the flap 120 in respect to each other. In the embodiment of Fig. 6 and 7a-7c, the upper and lower coupling members 130, 140 are in addition to being configured to provide a second axis of rotation 112 for rotating the flap in respect to the upper and lower coupling members 130, 140, also configured to provide a fourth axis of rotation 114 for rotating the flap 120 in respect to the main wingsail 110.

Reference is made to the embodiment shown in Fig. 7a - 7c, in which the upper and lower coupling members 130 and 140 are attached to the respective top end 115, 125 of the main wingsail 110 and the flap 120 and to the respective bottom end 116, 126 of the main wing 110 and the flap 120. The coupling members extend between the second axis of rotation 112 associated with the flap 120 and the fourth axis of rotation 114 associated with the main wingsail 110. By having the coupling members connected to the second and fourth axes of rotation 112, 114, the rotation of the flap 120 around the main wingsail 110 is enabled. At the same time the upper and lower coupling members 130, 140 are not configured to provide the first rotation axis 111 for rotation of the wingsail frame 101 in respect to the foundation. Instead, the first rotation axis 111 is associated with the bottom end 116 of the main wingsail 110, for example as shown in connection with the rotation arrangement 200 in Fig. 12. Thus, when the main wingsail 110 is rotated around the first rotation axis 111, the whole wingsail frame 101 rotates. The coupling members 130, 140 may in the embodiment of Fig. 7a-7c comprise a link arm. The link arm may be configured to be rotatable around the second and fourth rotational axes 112, 114 and may be connected to the second and fourth rotational axes 112, 114.

Reference is made to the embodiment shown in Fig. 8a - 8c, in which the upper and lower coupling members 130 and 140 are attached to the trailing edge 118 of the main wingsail and the leading edge of the flap 120. The upper and lower coupling members 130 and 140 are attached at a distance from the respective top end 115, 125 of the main wingsail 110 and the flap 120 and to the respective bottom end 116, 126 of the main wingsail 110 and the flap 120. There is an additional coupling member 150 attached between the upper and lower coupling members 130 and 140., and it should be noted that more than one additional coupling member can be used between the upper and the lower coupling members 130, 140. The coupling members 130, 140 and 150 extend between the second axis of rotation 112 associated with the flap 120 and the fourth axis of rotation 114 associated with the main wingsail 110. To facilitate the folding of the flap 120 to the second folded position (IIa), the coupling members 130, 140 and 150 may have a shape of a bent link arm. The link arm may be fitted to a recess in the respective main wingsail and flap and attached by suitable means to the side walls 211, 212, 221, 222 of the main wingsail and the flap. Also in this variant, the coupling members 130, 140 and 150 are not configured to provide the first rotation axis 111 for rotation of the wingsail frame 101 in respect to the foundation. Instead, the first rotation axis 111 is associated with the bottom end 116 of the main wingsail 110, for example as shown in connection with the rotation arrangement 200 in Fig. 12. Thus, when the main wingsail 110 is rotated around the first rotation axis 111, the whole wingsail frame 101 rotates.

The wind-assisted propulsion arrangement 10 may be operated according to a method comprising the steps of:
- controlling a degree of rotation of the wingsail frame 101, main wingsail 110 and/or the flap 120 in a first standing propulsive position (I) to provide a camber;
- folding the flap towards the main wingsail to provide a second, folded standing position (IIa; IIb)
- tilting the wingsail frame (101) towards the body of the vessel to provide a third tilted position (IIIa; IIIb).

The detailed description and the drawings are aimed to facilitate the understanding of the embodiments of the inventions, but do not limit the scope of the invention. The scope is limited by the appended claims.

## Claims

1. A wingsail structure (100) for a wind-assisted propulsion arrangement (10) of a marine vessel (1), the wingsail structure (100) comprising:
- a wingsail frame (101) comprising:
∘ a rigid or semi-rigid main wingsail (110) having an aerofoil shape with a leading edge, a trailing edge, a top end (115) and a bottom end (116), and side walls (211; 212) extending therebetween,
∘ a rigid or semi-rigid flap (120) having an aerofoil shape with a leading edge, a trailing edge, a top end (125) and a bottom end (126), and side walls (221; 222) extending therebetween,
∘ at least one upper coupling member (130) and at least one lower coupling member (140) connecting the main wingsail and the flap,
- a foundation (20) arranged to be fixed to a body (3) of the vessel (1), the foundation being associated with the wingsail frame such that the wingsail frame is rotatable in respect to the foundation via a first vertical axis of rotation (111),
wherein the upper and lower coupling members (130; 140) are configured to:
- bring the main wingsail and the flap to a first unfolded standing position (I), and
- bring the main wingsail and the flap towards one another to a second folded standing position (IIa; IIb) to reduce generated forces and the space required by the wingsail frame on board of the vessel, and where the main wingsail and the flap are in an overlapping position when looking in a transversal plane when in the second folded standing position, and
wherein the wingsail structure (101) further comprises a tilting arrangement (300) configured to bring the wingsail frame (101) from the second folded standing position (IIa; IIb) to a third tilted position (IIIa; IIIb) in respect to the foundation.

2. The wingsail structure (100) according to claim 1, wherein the upper and lower coupling members (130; 140) are configured to provide a second axis of rotation (112) for rotating the flap (120) in respect to the upper and lower coupling members (130; 140).

3. The wingsail structure (100) according to claim 1 or 2, wherein the upper and lower coupling members (130; 140) are configured to provide a third axis of rotation (113) for rotating the main wingsail (110) in respect to the upper and lower coupling members (130; 140).

4. The wingsail structure (100) of any one of the preceding claims, wherein the upper and lower coupling members (130; 140) are connected to the respective top end (115; 125) and a bottom end (116; 126) of the main wingsail and the flap and the lower coupling member is configured to provide the first axis of rotation (111) for rotating the wingsail frame (101) in respect to the foundation (20).

5. The wingsail structure (100) of any one of the preceding claims 1-2, wherein the upper and lower coupling members (130; 140) are configured to provide a fourth axis of rotation (114) associated with the main wingsail (110) for rotating the flap (120) in respect to the main wingsail (110).

6. The wingsail structure (100) of any one of the preceding claims, wherein the upper and lower coupling members (130; 140) are connected to the respective top end (115; 125) and a bottom end (116; 126) of the main wingsail and the flap.

7. The wingsail structure (100) of any one of the preceding claims 1-3 or 5, wherein the upper and lower coupling members (130; 140) are connected at a distance from the respective top end (115; 125) and a bottom end (116; 126).

8. The wingsail structure (100) according to any one of the preceding claims, wherein in the third tilted horizontal stowage position (IIIa), the wingsail frame (101) is arranged in a horizontal position in which a side wall (211, 212; 221, 222) extending between the leading edge (117; 127) and trailing edge (118; 128) of the respective main wing (110) and flap faces (120) the body of the vessel.

9. The wingsail structure (100) according to any one of the preceding claims, wherein in a third tilted vertical stowage position (IIIb), the wingsail frame (101) is arranged in a vertical position in which the leading edge (117) or the trailing edge (118) of the main wingsail (110) faces the body (3) of the vessel (1) and the trailing edge (128) or the leading edge (127) of the flap (120) faces the body of the vessel.

10. The wingsail structure (100) according to any one of the preceding claims, wherein the main wingsail and the flap, respectively, comprise one or more semi-rigid or rigid modules detachably connected to each other to form an integrated main wingsail or flap with the aerofoil shape.

11. A wind-assisted propulsion arrangement (10) comprising at least one wingsail structure (100) according to any one of the preceding claims 1-10.

12. A marine vessel (1) comprising the wind-assisted propulsion arrangement (10) according to claim 11.

## Patentansprüche

1. Flügelsegelstruktur (100) für eine windunterstützte Antriebsanordnung (10) eines Schiffes (1), wobei die Flügelsegelstruktur (100) Folgendes umfasst:
- einen Flügelsegelrahmen (101), der Folgendes umfasst:
o ein starres oder halb starres Hauptflügelsegel (110) mit einem aerodynamischen Profil mit einer Vorderkante, einer Hinterkante, einem oberen Ende (115) und einem unteren Ende (116), und Seitenwänden (211; 212), die sich dazwischen erstrecken,
o eine starre oder halbstarre Klappe (120) mit einem aerodynamischen Profil mit einer Vorderkante, einer Hinterkante, einem oberen Ende (125) und einem unteren Ende (126), und Seitenwänden (221; 222), die sich dazwischen erstrecken,
o mindestens ein oberes Kupplungselement (130) und mindestens ein unteres Kupplungselement (140), die das Hauptflügelsegel und die Klappe verbinden,
- einen Sockel (20), der so angeordnet ist, dass er an einem Rumpf (3) des Schiffes (1) befestigt ist, wobei der Sockel dem Flügelsegelrahmen derart zugeordnet ist, dass der Flügelsegelrahmen in Bezug auf den Sockel über eine erste vertikale Drehachse (111) drehbar ist,
wobei das obere und das untere Kupplungselement (130; 140) konfiguriert sind zum:
- Überführen des Hauptflügelsegels und der Klappe in eine erste entfaltete aufrechten Position (I), und
- Überführen des Hauptflügelsegels und der Klappe aufeinander zu in eine zweite gefaltete aufrechte Position (IIa; IIb), um erzeugte Kräfte und den Platzbedarf des Flügelsegelrahmens an Bord des Schiffes zu verringern, und wo sich das Hauptflügelsegel und die Klappe in einer überlappenden Position befinden, wenn in einer Querebene in der zweiten gefalteten aufrechten Position gesehen, und
wobei die Flügelsegelstruktur (101) ferner eine Kippanordnung (300) umfasst, die konfiguriert ist, um den Flügelsegelrahmen (101) aus der zweiten gefalteten aufrechten Position (IIa; IIb) in eine dritte gekippte Position (IIIa; IIIb) in Bezug auf den Sockel zu überführen.

2. Flügelsegelstruktur (100) nach Anspruch 1, wobei das obere und das untere Kupplungselement (130; 140) so konfiguriert sind, dass sie eine zweite Drehachse (112) zum Drehen der Klappe (120) in Bezug auf das obere und das untere Kupplungselement (130; 140) bereitstellen.

3. Flügelsegelstruktur (100) nach Anspruch 1 oder 2, wobei das obere und das untere Kupplungselement (130; 140) so konfiguriert sind, dass sie eine dritte Drehachse (113) zum Drehen des Hauptflügelsegels (110) in Bezug auf das obere und das untere Kupplungselement (130; 140) bereitstellen.

4. Flügelsegelstruktur (100) nach einem der vorhergehenden Ansprüche, wobei das obere und das untere Kupplungselement (130; 140) mit dem jeweiligen oberen Ende (115; 125) und einem unteren Ende (116; 126) des Hauptflügels und der Klappe verbunden sind und das untere Kupplungselement konfiguriert ist, um die erste Drehachse (111) zum Drehen des Flügelsegelrahmens (101) in Bezug auf den Sockel (20) bereitzustellen.

5. Flügelsegelstruktur (100) nach einem der vorstehenden Ansprüche 1 bis 2, wobei das obere und das untere Kupplungselement (130; 140) so konfiguriert sind, dass sie eine vierte Drehachse (114) bereitstellen, die dem Hauptflügelsegel (110) zugeordnet ist, um die Klappe (120) in Bezug auf das Hauptflügelsegel (110) zu drehen.

6. Flügelsegelstruktur (100) nach einem der vorhergehenden Ansprüche, wobei das obere und das untere Kupplungselement (130; 140) mit dem jeweiligen oberen Ende (115; 125) und einem unteren Ende (116; 126) des Hauptflügelsegels und der Klappe verbunden sind.

7. Flügelsegelstruktur (100) nach einem der vorstehenden Ansprüche 1 bis 3 oder 5, wobei das obere und das untere Kupplungselement (130; 140) in einem Abstand von dem jeweiligen oberen Ende (115; 125) und einem unteren Ende (116; 126) verbunden sind.

8. Flügelsegelstruktur (100) nach einem der vorhergehenden Ansprüche, wobei in der dritten gekippten horizontalen Stauposition (Illa) der Flügelsegelrahmen (101) in einer horizontalen Position angeordnet ist, in der eine Seitenwand (211, 212; 221, 222), die sich zwischen der Vorderkante (117; 127) und der Hinterkante (118; 128) des jeweiligen Hauptflügels (110) und der Klappe (120) erstreckt, dem Rumpf des Schiffes zugewandt ist.

9. Flügelsegelstruktur (100) nach einem der vorhergehenden Ansprüche, wobei in einer dritten gekippten vertikalen Stauposition (Illb) der Flügelsegelrahmen (101) in einer vertikalen Position angeordnet ist, in der die Vorderkante (117) oder die Hinterkante (118) des Hauptflügelsegels (110) dem Rumpf (3) des Schiffes (1) zugewandt ist und die Hinterkante (128) oder die Vorderkante (127) der Klappe (120) dem Rumpf des Schiffes zugewandt ist.

10. Flügelsegelstruktur (100) nach einem der vorhergehenden Ansprüche, wobei das Hauptflügelsegel und die Klappe jeweils ein oder mehrere halbstarre oder starre Module umfassen, die lösbar miteinander verbunden sind, um ein integriertes Hauptflügelsegel oder eine integrierte Klappe mit dem aerodynamischen Profil zu bilden.

11. Windunterstützte Antriebsanordnung (10) umfassend mindestens eine Flügelsegelstruktur (100) nach einem der vorhergehenden Ansprüche 1 bis 10.

12. Schiff (1), umfassend die windunterstützte Antriebsanordnung (10) nach Anspruch 11.

## Revendications

1. Structure de voile d'aile (100) pour un agencement de propulsion assistée par le vent (10) d'un navire (1), la structure de voile d'aile (100) comprenant :
- un cadre de voile d'aile (101) comprenant :
∘ une voile d'aile principale rigide ou semi-rigide (110) présentant un profil aérodynamique avec un bord d'attaque, un bord de fuite, une extrémité supérieure (115) et une extrémité inférieure (116) ainsi que des parois latérales (211 ; 212) s'étendant entre ceux-ci,
∘ un volet rigide ou semi-rigide (120) présentant un profil aérodynamique avec un bord d'attaque, un bord de fuite, une extrémité supérieure (125) et une extrémité inférieure (126) ainsi que des parois latérales (221 ; 222) s'étendant entre ceux-ci,
∘ au moins un élément de couplage supérieur (130) et au moins un élément de couplage inférieur (140) qui connectent la voile d'aile principale et le volet,
- une base (20) agencée pour être fixée sur un corps (3) du navire (1), la base étant associée au cadre de voile d'aile de telle sorte que le cadre de voile d'aile puisse être mis en rotation par rapport à la base *via* un premier axe de rotation vertical (111),
dans laquelle les éléments de couplage supérieur et inférieur (130 ; 140) sont configurés pour :
- placer la voile d'aile principale et le volet dans une première position verticale non repliée (I), et
- placer la voile d'aile principale et le volet en les rapprochant l'un de l'autre dans une deuxième position verticale repliée (IIa ; IIb) pour réduire des forces générées et l'espace requis par le cadre de voile d'aile à bord du navire, et où la voile d'aile principale et le volet sont dans une position de chevauchement lors d'une observation selon un plan transversal quand ils sont dans la deuxième position verticale repliée, et
dans laquelle la structure de voile d'aile (101) comprend en outre un agencement d'inclinaison (300) configuré pour faire passer le cadre de voile d'aile (101) de la deuxième position verticale repliée (IIa ; IIb) à une troisième position inclinée (IIIa ; IIIb) par rapport à la base.

2. Structure de voile d'aile (100) selon la revendication 1, dans laquelle les éléments de couplage supérieur et inférieur (130 ; 140) sont configurés pour fournir un deuxième axe de rotation (112) pour mettre en rotation le volet (120) par rapport aux éléments de couplage supérieur et inférieur (130 ; 140).

3. Structure de voile d'aile (100) selon la revendication 1 ou 2, dans laquelle les éléments de couplage supérieur et inférieur (130 ; 140) sont configurés pour fournir un troisième axe de rotation (113) pour mettre en rotation la voile d'aile principale (110) par rapport aux éléments de couplage supérieur et inférieur (130 ; 140).

4. Structure de voile d'aile (100) selon l'une quelconque des revendications précédentes, dans laquelle les éléments de couplage supérieur et inférieur (130 ; 140) sont connectés à l'extrémité supérieure respective (115 ; 125) et à une extrémité inférieure (116 ; 126) de la voile d'aile principale et du volet et l'élément de couplage inférieur est configuré pour fournir le premier axe de rotation (111) pour mettre en rotation le cadre de voile d'aile (101) par rapport à la base (20).

5. Structure de voile d'aile (100) selon l'une quelconque des revendications précédentes 1 à 2, dans laquelle les éléments de couplage supérieur et inférieur (130 ; 140) sont configurés pour fournir un quatrième axe de rotation (114) associé à la voile d'aile principale (110) pour mettre en rotation le volet (120) par rapport à la voile d'aile principale (110).

6. Structure de voile d'aile (100) selon l'une quelconque des revendications précédentes, dans laquelle les éléments de couplage supérieur et inférieur (130 ; 140) sont connectés à l'extrémité supérieure respective (115 ; 125) et à une extrémité inférieure (116 ; 126) de la voile d'aile principale et du volet.

7. Structure de voile d'aile (100) selon l'une quelconque des revendications 1 à 3 ou 5, dans laquelle les éléments de couplage supérieur et inférieur (130 ; 140) sont connectés à une distance de l'extrémité supérieure respective (115 ; 125) et d'une extrémité inférieure (116 ; 126).

8. Structure de voile d'aile (100) selon l'une quelconque des revendications précédentes, dans laquelle, dans la troisième position de rangement horizontale inclinée (IIIa), le cadre de voile d'aile (101) est agencé dans une position horizontale dans laquelle une paroi latérale (211, 212 ; 221, 222) qui s'étend entre le bord d'attaque (117 ; 127) et le bord de fuite (118 ; 128) de la voile d'aile principale (110) respective et du volet (120) fait face au corps du navire.

9. Structure de voile d'aile (100) selon l'une quelconque des revendications précédentes, dans laquelle, dans une troisième position de rangement verticale inclinée (IIIb), le cadre de voile d'aile (101) est agencé dans une position verticale dans laquelle le bord d'attaque (117) ou le bord de fuite (118) de la voile d'aile principale (110) fait face au corps (3) du navire (1) et le bord de fuite (128) ou le bord d'attaque (127) du volet (120) fait face au corps du navire.

10. Structure de voile d'aile (100) selon l'une quelconque des revendications précédentes, dans laquelle la voile d'aile principale et le volet comprennent respectivement un ou plusieurs modules semi-rigides ou rigides mutuellement connectés de façon amovible pour former une voile d'aile principale ou un volet intégré(e) présentant le profil aérodynamique.

11. Agencement de propulsion assistée par le vent (10) comprenant au moins une structure de voile d'aile (100) selon l'une quelconque des revendications précédentes 1 à 10.

12. Navire (1) comprenant l'agencement de propulsion assistée par le vent (10) selon la revendication 11.
